# FASCICULE DE BREVET EUROPEEN

(11) **EP 1 679 226 B1**
(45) Date de publication et mention de la délivrance du brevet: **24.11.2010**
(21) Numéro de dépôt: 06290052.7
(22) Date de dépôt: 09.01.2006
(51) Int. Cl.: B60Q 1/076

(54) **Projecteur comportant un actionneur de correction à encombrement longitudinal réduit**
Scheinwerfer mit einem platzsparenden Stellantrieb
Headlight with a space-saving adjusting actuator

(30) Priorité: 10.01.2005 FR 0500233
(43) Date de publication de la demande: 12.07.2006
(73) Titulaire: VALEO VISION, 93012 Bobigny Cedex (FR)
(72) Inventeur: Toulisse, Ludovic, 93700 Drancy (FR)
(74) Mandataire: Lemaire, Marc

(56) Documents cités:
- DE-A1- 4 204 097
- FR-A- 2 723 427
- FR-A- 2 800 335
- FR-A- 2 842 479
- US-B1- 6 428 196

## Description

L'invention concerne un projecteur de véhicule automobile qui est équipé d'un actionneur de correction de l'orientation du faisceau lumineux produit par le projecteur. Un actionneur de correction de ce type est par exemple décrit dans le brevet EP-0 985 577. D'autres actionneurs de corrections sont décrits dans les documents FR2800335, DE4204097 et FR2723427.

La présente invention vise notamment à proposer un perfectionnement à ce type de correcteur.

En particulier, la présente invention propose de réduire l'encombrement longitudinal de l'actionneur de correction de manière à faciliter son implantation à l'intérieur du boîtier externe du projecteur.

L'invention a pour objet un projecteur de véhicule automobile réalisant au moins un faisceau réglementaire d'éclairage dirigé globalement longitudinalement vers l'avant, du type comportant :
- un boîtier externe fermé à l'avant par une glace, (notamment globalement hermétique, bien que ces systèmes d'aération pour la ventilation puissent exister.)
- une unité d'éclairage qui est agencée à l'intérieur du boîtier externe et qui produit un faisceau lumineux dirigé vers l'avant,
- un actionneur de correction qui est agencé dans un boîtier interne à l'intérieur du boîtier externe et qui commande le pivotement de l'unité d'éclairage par rapport au boîtier externe, de manière à modifier l'orientation du faisceau d'éclairage par rapport à un axe, notamment longitudinal.

L'actionneur comporte une tige longitudinale qui est articulée, à son extrémité avant, sur l'unité d'éclairage (notamment commandée en coulissement longitudinal), par rapport au boîtier externe, électriquement au moyen d'un dispositif électrique d'entraînement et manuellement au moyen d'un ensemble d'engrenages.

L'ensemble d'engrenages comporte un pignon de commande qui engrène avec un pignon d'entraînement coaxial à la tige, le pignon de commande étant porté par un arbre de commande, substantiellement orthogonal à la tige ou oblique par rapport à la tige, qui s'étend vers l'extérieur à travers une paroi périphérique du boîtier externe. Selon l'invention, ce pignon de commande est disposé à l'arrière du dispositif électrique et il est situé à l'intérieur du boîtier interne.

De préférence, le pignon d'entraînement est agencé à l'extrémité axiale arrière de la tige et en ce que le dispositif électrique coopère, pour l'entraînement, avec un tronçon intermédiaire de la tige qui est agencé entre le pignon d'entraînement et l'extrémité avant de la tige.

Le projecteur selon l'invention présente l'avantage d'être équipé d'un actionneur de correction d'encombrement longitudinal réduit, ce qui permet notamment de réduire la profondeur longitudinale du boîtier du projecteur pour faciliter l'implantation du projecteur sur un véhicule.

Selon d'autres caractéristiques de l'invention :
- l'actionneur est disposé dans un boîtier interne qui est muni d'une ouverture axiale, à l'avant, pour le passage d'un tronçon d'extrémité avant de la tige, et d'au moins une ouverture radiale pour le passage de l'arbre de commande
   le boîtier interne est fixé sur une cloison interne du boîtier externe, notamment par emboîtement ou par vissage
- le boîtier interne comporte au moins une surface axiale annulaire complémentaire d'un tronçon de l'arbre de commande de manière à constituer un palier de guidage de l'arbre de commande ;
- le boîtier interne comporte plusieurs paliers de guidage qui sont orientés suivant des axes distincts, décalés angulairement les uns par rapport aux autres, de manière à permettre l'agencement du boîtier interne dans plusieurs positions angulaires par rapport à la direction longitudinale de la tige ;
- la surface intérieure du boîtier interne comporte au moins un, notamment plusieurs moyens de retenue longitudinale qui coopèrent avec une portion complémentaire du pignon d'entraînement de manière à le retenir longitudinalement contre la paroi arrière du boîtier interne ;
- le boîtier interne est constitué d'un capot arrière et d'un capot avant qui sont fixés l'un sur l'autre, et les moyens de retenue longitudinale sont portés par le capot arrière, le pignon d'entraînement étant monté par emboîtement dans les moyens de retenue longitudinale ;
- la portion de la face arrière du boîtier interne qui est agencée globalement en regard de l'extrémité arrière de la tige est déportée longitudinalement vers l'arrière, par rapport au reste de la face arrière du boîtier interne, de manière à délimiter, à l'intérieur du boîtier interne, un logement prévu pour contenir au moins un tronçon axial du pignon d'entraînement ;
- le logement défini par le boîtier interne présente une zone protubérante, notamment vers l'arrière, qui accueille l'ensemble des pignons de commande et d'entraînement ;
- le dispositif électrique d'entraînement s'étend longitudinalement entre l'extrémité axiale avant du pignon d'entraînement et la face avant du boîtier interne ;
- le pignon de commande et l'arbre de commande sont réalisés en une seule pièce.

D'autres caractéristiques et avantages apparaîtront au cours de la lecture de la description détaillée qui suit, pour la compréhension de laquelle on se reportera aux dessins annexés parmi lesquels :
- la figure 1 est une vue en coupe longitudinale verticale qui représente schématiquement un projecteur d'éclairage comportant un actionneur de correction conforme aux enseignements de l'invention ;
- la figure 2 est une vue similaire à celle de la figure 1 qui représente en détail l'actionneur de correction ;
- les figures 3 et 4 sont des vues en coupe transversale qui représentent schématiquement deux positions angulaires différentes d'une variante de réalisation du boîtier interne contenant l'actionneur de correction et comportant plusieurs paliers de guidage d'un arbre de commande.

On adoptera dans la suite de la description, et à titre non limitatif, une orientation longitudinale, verticale et transversale indiquée par le trièdre L, V, T des figures.

De plus, des éléments similaires ou identiques seront désignés par les mêmes références.

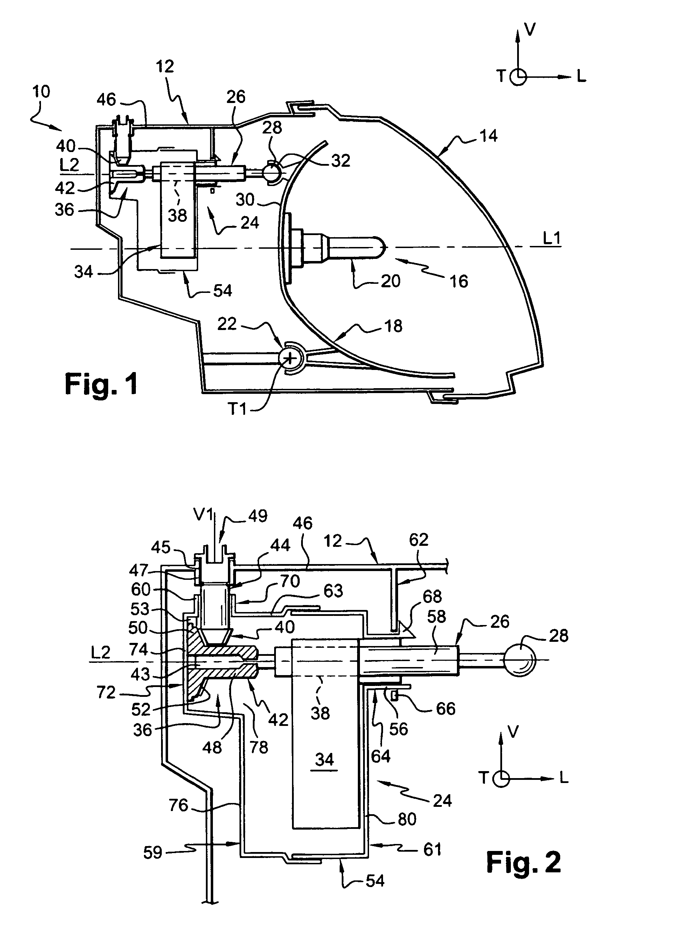

Sur la figure 1, on a représenté un projecteur 10 de véhicule automobile réalisant au moins un faisceau réglementaire d'éclairage dirigé globalement longitudinalement vers l'avant, c'est-à-dire vers la droite en considérant la figure 1.

Le projecteur 10 comporte un boîtier externe 12 hermétique qui est fermé à l'avant par une paroi translucide 14.

Une unité d'éclairage 16 est agencée à l'intérieur du boîtier externe 12 en vue de produire le faisceau d'éclairage.

Selon l'exemple de réalisation représenté, l'unité d'éclairage 16 comporte un réflecteur 18 globalement parabolique et une lampe 20 associée.

Dans sa partie inférieure, l'unité d'éclairage 16 est montée articulée, ici au moyen d'une liaison 22 du type rotule, sur une face intérieure du boîtier externe 12, de manière que l'unité d'éclairage 16 puisse pivoter globalement autour d'un axe transversal T1 fixe.

Un actionneur 24 de correction, qui est représenté plus particulièrement sur la figure 2, est agencé à l'intérieur du boîtier externe 12, à l'arrière du réflecteur 18.

L'actionneur 24 de correction commande le pivotement de l'unité d'éclairage 16 autour de son axe transversal T1, par rapport au boîtier externe 12, ce qui permet de modifier l'orientation du faisceau d'éclairage par rapport à un axe longitudinal L1.

A cet effet, l'actionneur 24 comporte une tige 26 longitudinale qui est articulée, à son extrémité axiale avant 28, sur la face arrière 30 du réflecteur 18 et qui est commandée en coulissement, suivant un axe longitudinal L2, par rapport au boîtier externe 12.

L'articulation de la tige 26 sur le réflecteur 18 est ici du type à rotule, l'extrémité axiale avant 28 de la tige 26 étant de forme globalement sphérique et étant reçue à emboîtement dans une capsule 32 complémentaire portée par la face arrière 30 du réflecteur 18.

La capsule 32 est ici agencée dans la partie supérieure du réflecteur 18.

Le coulissement de la tige 26 peut être commandé à la fois électriquement, au moyen d'un dispositif électrique 34 d'entraînement, et manuellement, au moyen d'un ensemble d'engrenages 36.

Le dispositif électrique 34 comporte généralement un moteur électrique et des moyens de transmission (non représentés) qui coopèrent avec un tronçon 38 associé de la tige 26 pour provoquer son coulissement longitudinal.

L'ensemble d'engrenages 36 comporte un pignon de commande 40, ici d'axe V1 vertical, qui engrène avec un pignon d'entraînement 42 coaxial à la tige 26.

Le pignon de commande 40 est porté par un arbre de commande 44 orthogonal à la tige 26 qui s'étend ici verticalement vers l'extérieur du boîtier externe 12, à travers une ouverture externe 45 aménagée dans la paroi périphérique 46 du boîtier externe 12.

L'ouverture externe 45 comporte ici une portion tubulaire 47 pour le guidage en rotation de l'arbre de commande 44.

De préférence, le pignon de commande 40 est réalisé d'une seule pièce avec l'arbre de commande 44, par moulage en matière plastique.

Selon l'exemple de réalisation représenté, l'extrémité inférieure de l'arbre de commande 44 comporte une denture conique qui forme le pignon de commande 40.

L'extrémité supérieure de l'arbre de commande 44 comporte ici une rainure 49 qui permet, au moyen d'un tournevis, d'entraîner manuellement en rotation l'arbre de commande 44 autour de son axe V1.

Conformément à une première caractéristique du projecteur 10 selon l'invention, le pignon d'entraînement 42 est agencé sur le tronçon d'extrémité axiale arrière 43 de la tige 26.

Le pignon d'entraînement 42 comporte ici un tronçon d'extrémité avant 48 globalement tubulaire cylindrique qui est vissé sur le tronçon d'extrémité axiale arrière 43 de la tige 26 et un tronçon d'extrémité arrière 50, globalement annulaire tronconique, qui porte, sur sa face avant, une denture conique 52 complémentaire de la denture du pignon de commande 40.

L'ensemble d'engrenages 36 comporte des moyens 53 de retenue longitudinale qui retiennent le pignon d'entraînement 42, par rapport à la tige 26, de sorte que la rotation du pignon d'entraînement 42 autour de son axe L2 provoque le coulissement longitudinal de la tige 26.

Conformément à une seconde caractéristique du projecteur 10 selon l'invention, le tronçon intermédiaire 38 de la tige 26, avec lequel le dispositif électrique 34 coopère pour l'entraînement, est agencé entre le pignon d'entraînement 42 et l'extrémité avant 28 de la tige 26.

Avantageusement, l'actionneur 24 est enveloppé dans un boîtier interne 54, ici de forme globalement parallélépipédique, qui est muni d'une ouverture axiale 56, à l'avant, pour le passage d'un tronçon d'extrémité avant 58 de la tige 26, et d'au moins une ouverture radiale 60 pour le passage de l'arbre de commande 44.

Le boîtier interne 54 est constitué ici d'un capot arrière 59 et d'un capot avant 61 qui sont fixés l'un sur l'autre.

Le boîtier interne 54 est fixé sur une cloison interne 62 transversale du boîtier externe 12 par emboîtement et verrouillage à baïonnette.

A cet effet, le boîtier interne 54 comporte, à l'avant, une portion tubulaire 64 coaxiale à la tige 26 qui est reçue de manière complémentaire dans une fenêtre de fixation 66 aménagée à travers la cloison interne 62.

L'extrémité axiale avant de la portion tubulaire 64 est munie d'au moins un ergot 68 pour le verrouillage à baïonnette.

Bien entendu, le boîtier interne 54 pourrait être fixé de manière différente, par exemple par vissage.

L'ouverture radiale 60 est aménagée dans la paroi supérieure 63, qui est ici globalement horizontale, du boîtier interne 54.

Avantageusement, le boîtier interne 54 comporte au moins une surface axiale annulaire 70 complémentaire d'un tronçon de l'arbre de commande 44 de manière à constituer, pour l'arbre de commande 44, un palier de guidage 70 en rotation.

Le palier de guidage 70 est constitué ici par un col tubulaire qui est réalisé venu de matière avec le pourtour de l'ouverture radiale 60 et qui s'étend verticalement vers le haut, ce qui correspond à une direction radiale par rapport à l'axe longitudinal L2 de la tige 26.

Le palier de guidage 70 permet de garantir un bon engrènement du pignon de commande 40 avec le pignon d'entraînement 42, notamment lorsque la distance entre l'ouverture radiale 60 et l'ouverture externe 45 est relativement importante.

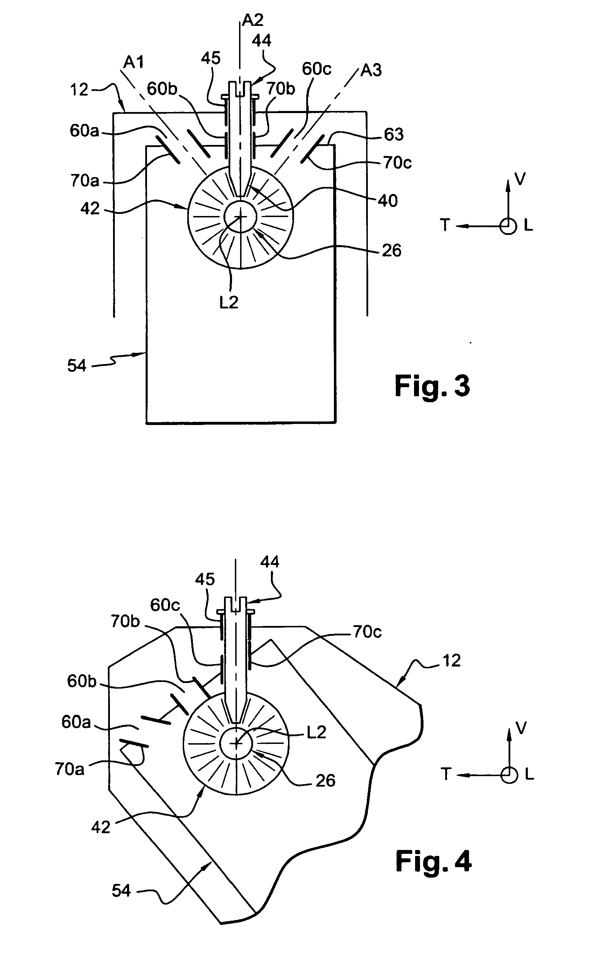

Selon une variante de réalisation, qui est représentée sur les figures 3 et 4, le boîtier interne 54 comporte plusieurs paliers de guidage 70a, 70b, 70c, ici au nombre de trois, associés à autant d'ouvertures radiales 60a, 60b, 60c.

Les axes A1, A2, A3 des paliers de guidage 70a, 70b, 70c sont décalés angulairement les uns par rapport aux autres, de manière à permettre l'agencement du boîtier interne 54 dans plusieurs positions angulaires, ici trois, par rapport à l'axe longitudinal L2 de la tige 26.

En fonction du palier de guidage 70a, 70b, 70c choisi pour monter l'arbre de commande 40, l'orientation globale du boîtier interne 54 est différente, ce qui permet de choisir une orientation de boîtier interne 54 adaptée à la forme de la cavité délimitée par le boîtier externe 12.

Sur la figure 3, un palier de guidage 70b intermédiaire est choisi, de sorte que le boîtier interne 54 s'étend globalement verticalement.

Sur la figure 4, un palier de guidage latéral 70c est choisi, de sorte que le boîtier interne 54 est incliné d'environ quarante-cinq degrés par rapport à une direction verticale.

Selon le mode de réalisation préféré de l'invention, les moyens de retenue longitudinale 53 du pignon d'entraînement 42 sont portés par la paroi intérieure du capot arrière 59 du boîtier interne 54, de manière à retenir le pignon d'entraînement 42 contre une portion 74 de la paroi arrière 72 du capot arrière 59.

Le pignon d'entraînement 42 est monté par emboîtement dans les moyens de retenue longitudinale 53, ce qui permet de pré assembler le pignon d'entraînement 42 sur le capot arrière 59, en vue de faciliter l'assemblage de l'actionneur 24. Ces moyens de retenue sont par exemple du type clips. On peut prévoir une pluralité de ces clips, de préférence répartis angulairement. Ces moyens de retenue 53 sont utiles lors du montage du correcteur, avant que celui-ci ne soit fixé au projecteur : en effet, ces moyens permettent d'immobiliser en translation le pignon 42 dans le boîtier interne 54 avant montage dans le projecteur, l'assemblage s'en trouvant facilité.

Avantageusement, la paroi arrière 72 du capot arrière 59 comporte une portion supérieure 74, globalement transversale verticale, déportée vers l'arrière, et une portion inférieure 76, globalement transversale verticale, déportée vers l'avant.

La portion supérieure 74 est agencée globalement en regard de l'extrémité arrière de la tige 26.

Le déport longitudinal entre la portion supérieure 74 et la portion inférieure 76 délimite, à l'intérieur du boîtier interne 54, un logement 78 prévu pour contenir au moins un tronçon axial du pignon d'entraînement 42.

La portion inférieure 76 est décalée longitudinalement vers l'avant, par rapport au pignon d'entraînement 40.

Le dispositif électrique 34 s'étend longitudinalement entre l'extrémité axiale avant du pignon d'entraînement 42 et la paroi avant 80, globalement transversale, du capot avant 61.

La structure particulière du boîtier interne 54, en particulier sa paroi arrière 72, permet de minimiser son encombrement longitudinal dans sa partie inférieure.

L'agencement des éléments constituant l'actionneur 24 dans le boîtier interne 54 permet de constituer un ensemble unitaire qui peut être livré pré assemblé, directement sur les chaînes de montage du projecteur 10.

## Revendications

1. Projecteur (10) de véhicule automobile réalisant au moins un faisceau réglementaire d'éclairage dirigé vers l'avant, du type comportant :
- un boîtier externe (12) fermé à l'avant par une glace (14),
- une unité d'éclairage (16) qui est agencée à l'intérieur du boîtier externe (12) et qui produit le faisceau d'éclairage,
- un actionneur (24) de correction qui est agencé dans un boîtier interne (54) à l'intérieur du boîtier externe (12) et qui commande le pivotement de l'unité d'éclairage (16) par rapport au boîtier externe (12), de manière à modifier l'orientation du faisceau d'éclairage par rapport à un axe longitudinal (L1),
- du type dans lequel l'actionneur (24) comporte une tige (26) longitudinale qui est articulée, à son extrémité avant (28), sur l'unité d'éclairage (16), par rapport au boîtier externe (12), électriquement au moyen d'un dispositif électrique (34) d'entraînement et manuellement au moyen d'un ensemble d'engrenages (36), du type dans lequel l'ensemble d'engrenages (36) comporte un pignon de commande (40) qui engrène avec un pignon d'entraînement (42) coaxial à la tige (26), le pignon de commande (40) étant porté par un arbre de commande (44), substantiellement orthogonal à ou oblique par rapport à la tige (26), qui s'étend vers l'extérieur à travers une ouverture externe (45) aménagée dans la paroi périphérique (46) du boîtier externe (12),
**caractérisé en ce que** le pignon de commande (40) est disposé à l'arrière du dispositif électrique (34) et ce que ledit pignon de commande (40) se situe à l'intérieur du boîtier interne (54), le boîtier interne (54) comportant au moins une surface axiale annulaire (70) complémentaire d'un tronçon de l'arbre de commande (44), de manière à constituer un palier de guidage (70) de l'arbre de commande (44), l'ouverture externe (45) comportant une portion tubulaire (47) pour le guidage en rotation de l'arbre de commande (44).

2. Projecteur selon la revendication précédente, **caractérisé en ce que** le pignon de commande (40) est agencé à l'extrémité axiale arrière (43) de la tige (26) et **en ce que** le dispositif électrique (34) coopère, pour l'entraînement, avec un tronçon intermédiaire (38) de la tige (26) qui est agencé entre le pignon d'entraînement (42) et l'extrémité avant (28) de la tige (26).

3. Projecteur (10) selon l'une des revendications précédentes, **caractérisé en ce que** l'actionneur (24) est disposé dans le boîtier interne (54) qui est muni d'une ouverture axiale (56), à l'avant, pour le passage d'un tronçon d'extrémité avant (58) de la tige (26), et d'au moins une ouverture radiale (60) pour le passage de l'arbre de commande (44).

4. Projecteur selon l'une des revendications précédentes **caractérisé en ce que** le boîtier interne (54) est fixé sur une cloison interne (62) du boîtier externe (12), notamment par emboîtement ou par vissage.

5. Projecteur (10) selon la revendication précédente, **caractérisé en ce que** le boîtier interne (54) comporte plusieurs paliers de guidage (70) qui sont orientés suivant des axes (A1, A2, A3) distincts, décalés angulairement les uns par rapport aux autres, de manière à permettre l'agencement du boîtier interne (54) dans plusieurs positions angulaires par rapport à la direction longitudinale (L1) de la tige (26).

6. Projecteur (10) selon l'une quelconque des revendications 2 à 4, **caractérisé en ce que** la surface intérieure du boîtier interne (54) comporte au moins un moyen de retenue longitudinale (53) qui coopèrent avec une portion complémentaire du pignon d'entraînement (42) de manière à le retenir longitudinalement contre la paroi arrière (72) du boîtier interne (54).

7. Projecteur (10) selon la revendication précédente, **caractérisé en ce que** le boîtier interne (54) est constitué d'un capot arrière (59) et d'un capot avant (61) qui sont fixés l'un sur l'autre, et **en ce que** les moyens de retenue longitudinale (53) sont portés par le capot arrière (59), le pignon d'entraînement (42) étant monté par emboîtement dans les moyens de retenue longitudinale (53).

8. Projecteur (10) selon l'une quelconque des revendications précédentes, **caractérisé en ce que** le logement défini par boîtier interne (54) présente une zone protubérante, notamment vers l'arrière, qui accueille l'ensemble des pignons de commande (40) et d'entraînement (42).

9. Projecteur (10) selon l'une quelconque des revendications précédentes, **caractérisé en ce que** le dispositif électrique (34) d'entraînement s'étend entre le pignon de commande (40) et la paroi avant (80) du boîtier interne (54).

10. Projecteur (10) selon l'une quelconque des revendications précédentes, **caractérisé en ce que** le pignon de commande (40) et l'arbre de commande (44) sont réalisés en une seule pièce.

## Claims

1. Automobile headlight (10) producing at least one regulatory lighting beam directed towards the front, of the type comprising:
- an external casing (12) closed at the front by a lens (14),
- a lighting unit (16) which is arranged inside the external casing (12) and which produces the lighting beam,
- a correction actuator (24) which is arranged in an internal casing (54) inside the external casing (12) and which controls the pivoting of the lighting unit (16) with respect to the external casing (12), so as to modify the orientation of the lighting beam with respect to a longitudinal axis (L1),
of the type in which actuator (24) comprises a longitudinal rod (26) which is articulated, at its front end (28), on the lighting unit (16), with respect to the external casing (12), electrically by means of an electrical drive device (34) and manually by means of a set of gears (36), of the type in which the set of gears (36) comprises a control pinion (40) which meshes with a drive pinion (42) coaxial with the rod (26), the control pinion (40) being carried by a control shaft (44), substantially orthogonal to or oblique with respect to the rod (26), which extends outwards through an external opening (45) provided in the peripheral wall (46) of the external casing (12), **characterised in that** the control pinion (40) is disposed at the rear of the electrical device (34) and **in that** the said control pinion (40) is situated inside the internal casing (54), the internal casing (54) comprising at least one complementary annular axial surface (70) of a portion of the control shaft (44), so as to constitute a bearing (70) guiding the control shaft (44), the external opening (45) comprising a tubular portion (47) for rotational guidance of the control shaft (44).

2. Headlight according to the preceding claim, **characterised in that** the control pinion (40) is arranged at the rear axial end (43) of the rod (26) and **in that** the electrical device (34) cooperates, for driving, with an intermediate portion (38) of the rod (26) which is arranged between the drive pinion (42) and the front end (28) of the rod (26).

3. Headlight (10) according to one of the preceding claims, **characterised in that** the actuator (24) is disposed in the internal casing (54) which is provided with an axial opening (56), at the front, for a front end portion (58) of the rod (26) to pass, and at least one radial opening (60) for the control shaft (44) to pass.

4. Headlight according to one of the preceding claims, **characterised in that** the internal casing (54) is fixed to an internal partition (62) of the external casing (12), in particular by snapping in or screwing.

5. Headlight (10) according to the preceding claim, **characterised in that** the internal casing (54) comprises several guide bearings (70) which are oriented along distinct axes (A1, A2, A3), offset angularly with respect to one another, so as to permit the arrangement of the internal casing (54) in several angular positions with respect to the longitudinal direction (L1) of the rod (26).

6. Headlight (10) according to any one of claims 2 to 4, **characterised in that** the internal surface of the internal casing (54) comprises at least one longitudinal holding means (53) which cooperates with a complementary portion of the drive pinion (42) so as to hold it longitudinally against the rear wall (72) of the internal casing (54).

7. Headlight (10) according to the preceding claim, **characterised in that** the internal casing (54) consists of a rear cover (59) and a front cover (61) which are fixed to each other, and **in that** the longitudinal holding means (53) are carried by the rear cover (59), the drive pinion (42) being mounted by snapping-in in the longitudinal holdings means (53).

8. Headlight (10) according to any one of the preceding claims, **characterised in that** the housing defined by the internal casing (54) has an area which is protuberant, in particular towards the rear, and which houses all the control (40) and drive (42) pinions.

9. Headlight (10) according to any one of the preceding claims, **characterised in that** the electrical drive device (34) extends between the control pinion (40) and the front wall (80) of the internal casing (54).

10. Headlight (10) according to any one of the preceding claims, **characterised in that** the control pinion (40) and the control shaft (44) are produced in a single piece.

## Patentansprüche

1. Kraftfahrzeugscheinwerfer (10), der mindestens ein ordnungsgemäßes Lichtbündel nach vorne erzeugt, des Typs mit
- einem vorne durch eine Scheibe (14) abgeschlossenen äußeren Gehäuse (12),
- einer Beleuchtungseinheit (16), die innerhalb des äußeren Gehäuses (12) angeordnet ist und die das Lichtbündel erzeugt,
- einem Korrekturstellorgan (24), das in einem inneren Gehäuse (54) innerhalb des äußeren Gehäuses (12) angeordnet ist und das die Schwenkbewegung der Beleuchtungseinheit (16) bezüglich des äußeren Gehäuses (12) solchermaßen steuert, dass die Ausrichtung des Lichtbündels bezüglich einer Längsachse (L1) verändert wird,
- des Typs, bei dem das Stellorgan (24) eine Längsstange (26) umfasst, die an ihrem vorderen Ende (28) bezüglich des äußeren Gehäuses (12) an der Beleuchtungseinheit (16) elektrisch mittels einer elektrischen Antriebsvorrichtung (34) und manuell mittels eines Getriebesatzes (36) angelenkt ist, des Typs, bei dem der Getriebesatz (36) ein Steuerritzel (40) umfasst, das mit einem zur Stange (26) koaxialen Antriebsritzel (42) ineinandergreift, wobei das Steuerritzel (40) von einer zur Stange (26) im Wesentlichen orthogonalen oder schrägen Steuerwelle (44) getragen ist, die sich durch eine in der Umfangswand (46) des äußeren Gehäuses (12) ausgebildete äußere Öffnung (45) hindurch nach außen erstreckt,
**dadurch gekennzeichnet, dass** das Steuerritzel (40) an der Rückseite der elektrischen Vorrichtung (34) angeordnet ist, und dass sich das Steuerritzel (40) innerhalb des inneren Gehäuses (54) befindet, wobei das innere Gehäuse (54) wenigstens eine ringförmige axiale Fläche (70) aufweist, die zu einem Stück der Steuerwelle (44) komplementär ist, so dass ein Lager (70) zur Führung der Steuerwelle (44) gebildet wird, wobei die äußere Öffnung (45) einen rohrförmigen Abschnitt (47) zur drehenden Führung der Steuerwelle (44) umfasst.

2. Scheinwerfer nach dem vorhergehenden Anspruch,
**dadurch gekennzeichnet, dass** das Steuerritzel (40) am hinteren axialen Ende (43) der Stange (26) angeordnet ist und dass die elektrische Vorrichtung (34) zum Antrieb mit einem Zwischenstück (38) der Stange (26), das zwischen dem Antriebsritzel (42) und dem vorderen Ende (28) der Stange (26) angeordnet ist, zusammenwirkt.

3. Scheinwerfer (10) nach einem der vorhergehenden Ansprüche,
**dadurch gekennzeichnet, dass** das Stellorgan (24) in dem inneren Gehäuse (54) angeordnet ist, das vorne mit einer axialen Öffnung (56) zum Hindurchführen eines vorderen Endstücks (58) der Stange (26) und mit wenigstens einer radialen Öffnung (60) zum Hindurchführen der Steuerwelle (44) versehen ist.

4. Scheinwerfer (10) nach einem der vorhergehenden Ansprüche,
**dadurch gekennzeichnet, dass** das innere Gehäuse (54) an einer Innenwand (62) des äußeren Gehäuses (12) insbesondere durch Einstecken oder Anschrauben befestigt ist.

5. Scheinwerfer (10) nach dem vorhergehenden Anspruch,
**dadurch gekennzeichnet, dass** das innere Gehäuse (54) mehrere Führungslager (70) aufweist, die längs unterschiedlicher Achsen (A1, A2, A3) ausgerichtet sind, welche bezüglich einander winkelmäßig versetzt sind, so dass die Anordnung des inneren Gehäuses (54) in mehreren Winkelstellungen bezüglich der Längsrichtung (L1) der Stange (26) möglich ist.

6. Scheinwerfer (10) nach einem der Ansprüche 2 bis 4,
**dadurch gekennzeichnet, dass** die Innenfläche des inneren Gehäuses (54) wenigstens eine Längsabstützung (53) aufweist, die mit einem komplementären Teil des Antriebsritzels (42) so zusammenwirkt, dass es in Längsrichtung gegen die Rückwand (72) des inneren Gehäuses (54) gehalten wird.

7. Scheinwerfer (10) nach dem vorhergehenden Anspruch,
**dadurch gekennzeichnet, dass** das innere Gehäuse (54) von einer hinteren Abdeckung (59) und einer vorderen Abdeckung (61) gebildet ist, die aneinander befestigt sind, und dass die Längsabstützung (53) von der hinteren Abdeckung (59) getragen ist, wobei das Antriebsritzel (42) durch Einstecken in die Längsabstützung (53) montiert ist.

8. Scheinwerfer (10) nach einem der vorhergehenden Ansprüche,
**dadurch gekennzeichnet, dass** die von dem inneren Gehäuse (54) gebildete Aufnahme einen sich insbesondere nach hinten vorwölbenden Bereich aufweist, der die Einheit aus Steuerritzel (40) und Antriebsritzel (42) aufnimmt.

9. Scheinwerfer (10) nach einem der vorhergehenden Ansprüche,
**dadurch gekennzeichnet, dass** sich die elektrische Antriebsvorrichtung (34) zwischen dem Steuerritzel (40) und der vorderen Wand (80) des inneren Gehäuses (54) erstreckt.

10. Scheinwerfer (10) nach einem der vorhergehenden Ansprüche,
**dadurch gekennzeichnet, dass** das Steuerritzel (40) und die Steuerwelle (44) in einem Stück ausgeführt sind.
